# EUROPEAN PATENT APPLICATION

(11) **EP 3 557 923 A1**
(43) Date of publication of application: **23.10.2019**
(21) Application number: 17884414.8
(22) Date of filing: 18.12.2017
(51) Int. Cl.: H04W 72/04, H04L 27/26

(54) **USER TERMINAL**

(30) Priority: 19.12.2016 JP 2016245979
(71) Applicant: NTT DOCOMO, INC., Chiyoda-ku Tokyo 100-6150 (JP)
(72) Inventor: MOROGA, Hideyuki, Tokyo 100-6150 (JP); TAKEDA, Kazuaki, Tokyo 100-6150 (JP); NAGATA, Satoshi, Tokyo 100-6150 (JP)
(74) Representative: Hoffmann Eitle
(86) International application number: PCT/JP2017/045353
(87) International publication number: WO 2018/117033

(57) **Abstract**

The load of search processing of a downlink control signal is reduced in a downlink of a radio communication system of the future. A user terminal includes: a reception section that receives a downlink signal including a downlink control signal and a downlink data signal; and a demodulation and decoding section that uses the downlink control signal to demodulate and decode the downlink data signal, in which the downlink control signal is mapped to a single carrier in units of control channel elements based on a tree-based structure, and the demodulation and decoding section decodes the downlink control signal in a UE search space in units of control channel elements based on the tree-based structure.

## Description

### Technical Field

The present invention relates to a user terminal in a next-generation mobile communication system.

### Background Art

In a UMTS (Universal Mobile Telecommunication System) network, Long Term Evolution (LTE) is specified for a higher data rate, lower latency, and the like (NPL 1). For a broader bandwidth and a higher speed based on LTE, successor systems of LTE are also studied. Examples of the successor systems of the LTE include so-called LTE-A (LTE-Advanced), FRA (Future Radio Access), 5G (5th generation mobile communication system), 5G+ (5G plus), and New-RAT (Radio Access Technology).

Using a high frequency band of 30 GHz or higher as a radio frequency is studied in a radio communication system of the future. Using a single carrier for a transmission waveform in a downlink (DL) of the high frequency band is also examined. In this case, the single carrier or DFT (Discrete Fourier Transform) Spread OFDM (Orthogonal Frequency Division Multiplexing) can be used for a low PAPR (Peak to Average Power Ration) and phase noise compensation.

### Citation List

### Non-Patent Literature

NPL 1 3GPP TS 36.300 v13.4.0, "Evolved Universal Terrestrial Radio Access (E-UTRA) and Evolved Universal Terrestrial Radio Access Network (E-UTRAN); Overall description; Stage 2 (Release 13)," June 2016

### Summary of Invention

### Technical Problem

However, there is currently no downlink single carrier in 5G. Therefore, blind decoding of a downlink control signal in the single carrier is not sufficiently examined in the radio communication system of the future, and the load of search processing of the downlink control signal may be increased.

An object of an aspect of the present invention is to provide a technique of reducing the load of search processing of a downlink control signal in a downlink of a radio communication system of the future.

### Solution to Problem

An aspect of the present invention provides a user terminal including: a reception section that receives a downlink signal including a downlink control signal and a downlink data signal; and a demodulation and decoding section that uses the downlink control signal to demodulate and decode the downlink data signal, in which the downlink control signal is mapped to a single carrier in units of control channel elements based on a tree-based structure, and the demodulation and decoding section decodes the downlink control signal in a UE search space on the basis of control channel elements based on the tree-based structure.

### Advantageous Effects of Invention

According to the aspect of the present invention, the load of the search processing of the downlink control signal can be reduced in the downlink of the radio communication system of the future.

### Brief Description of Drawings

FIG. 1 illustrates a configuration example of functional blocks of a radio base station according to Embodiment 1;
FIG. 2 illustrates a configuration example of functional blocks of a user terminal according to Embodiment 1;
FIG. 3 illustrates a mapping example of a DL control signal according to Embodiment 1;
FIG. 4 illustrates a mapping example of the DL control signal according to Modification 1 of Embodiment 1;
FIG. 5A illustrates a mapping example of the DL control signal according to Modification 2 of Embodiment 1;
FIG. 5B illustrates a mapping example of the DL control signal according to Modification 2 of Embodiment 1;
FIG. 6 illustrates a mapping example of the DL control signal according to Modification 3 of Embodiment 1;
FIG. 7A illustrates a mapping example of the DL control signal according to Modification 4 of Embodiment 1;
FIG. 7B illustrates a mapping example of the DL control signal according to Modification 4 of Embodiment 1;
FIG. 8 illustrates a mapping example of the DL control signal according to Modification 5 of Embodiment 1;
FIG. 9 illustrates a mapping example of the DL control signal according to Modification 6 of Embodiment 1;
FIG. 10 illustrates a configuration example of functional blocks of the radio base station according to Embodiment 2;
FIG. 11 illustrates a configuration example of functional blocks of the user terminal according to Embodiment 2;
FIG. 12A illustrates a mapping example of the DL control signal according to Embodiment 2;
FIG. 12B illustrates a mapping example of the DL control signal according to Embodiment 2;
FIG. 13 illustrates a configuration example of functional blocks of the radio base station according to Embodiment 3;
FIG. 14 illustrates a configuration example of functional blocks of the user terminal according to Embodiment 3;
FIG. 15 is a diagram describing transmission of the DL control signal when MIMO is applied; and
FIG. 16 illustrates an example of a hardware configuration of the radio base station and the user terminal according to Embodiment of the present invention.

### Description of Embodiments

Hereinafter, embodiments of the present invention will be described with reference to the accompanying drawings.

### [Embodiment 1]

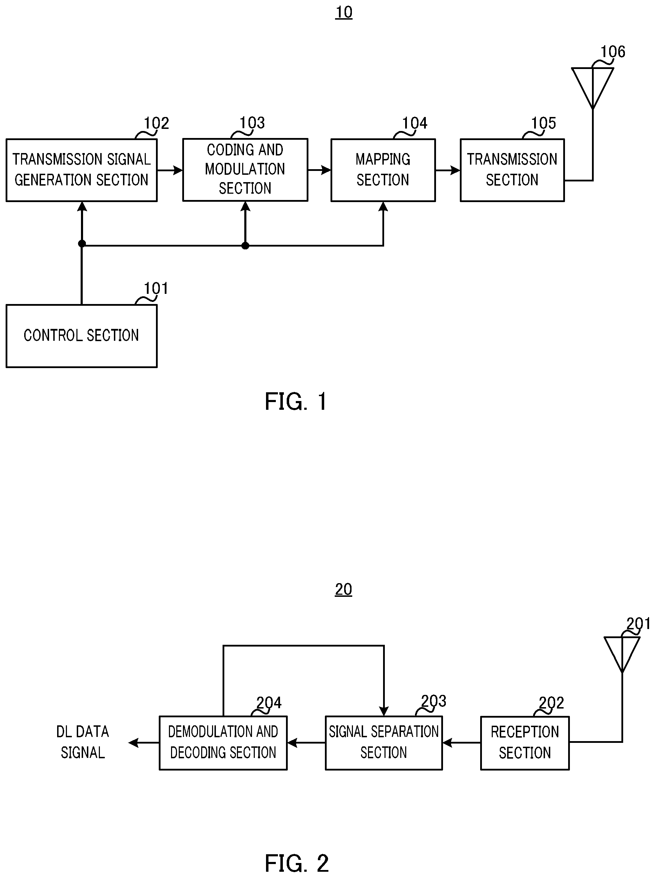

A radio communication system according to Embodiment 1 includes at least radio base station 10 shown in FIG. 1 and user terminal 20 shown in FIG. 2. User terminal 20 is connected to radio base station 10. Radio base station 10 transmits a DL (Down Link) signal to user terminal 20. The DL signal includes, for example, a DL data signal (for example, PDSCH (Physical Downlink Shared Channel)) and a DL control signal (for example, PDCCH (Physical Downlink Control Channel)) for demodulating and decoding the DL data signal.

FIG. 1 illustrates a configuration example of functional blocks of the radio base station according to Embodiment 1. Radio base station 10 shown in FIG. 1 includes control section 101, transmission signal generation section 102, coding and modulation section 103, mapping section 104, transmission section 105, and antenna 106.

Control section 101 is, for example, a scheduler. Control section 101 creates a schedule (for example, resource assignment) of the DL signal. Control section 101 assigns time regions (time direction) of radio resources of a single carrier described later to the DL signal. Control section 101 outputs the generated scheduling information to transmission signal generation section 102, coding and modulation section 103, and mapping section 104. Although the present invention can also be realized by DFT Spread OFDM, an example of a single carrier will be described below.

Transmission signal generation section 102 generates a DL signal including a DL data signal and a DL control signal. The DL control signal included in the DL signal includes, for example, downlink control information (DCI) including the scheduling information output from control section 101. Transmission signal generation section 102 outputs the generated DL signal to coding and modulation section 103.

Coding and modulation section 103 applies coding processing and modulation processing to the DL signal generated by transmission signal generation section 102 based on the scheduling information generated by control section 101. Coding and modulation section 103 outputs the DL signal after the coding processing and the modulation processing to mapping section 104.

The DL signal output from coding and modulation section 103 is input to mapping section 104. The scheduling information output from control section 101 is also input to mapping section 104. Based on the scheduling information output from control section 101, mapping section 104 maps the DL signal output from transmission signal generation section 102 on the radio resources of the single carrier. Mapping section 104 outputs the DL signal mapped to the radio resources to transmission section 105. Note that details of the mapping method of the DL control signal will be described later.

Transmission section 105 applies transmission processing, such as up-conversion and amplification, to the DL signal output from mapping section 104 and transmits the DL signal (radio frequency signal) from antenna 106.

FIG. 2 illustrates a configuration example of functional blocks of the user terminal according to Embodiment 1. User terminal 20 shown in FIG. 2 includes antenna 201, reception section 202, signal separation section 203, and demodulation and decoding section 204.

A DL signal (radio frequency signal) received by antenna 201 is input to reception section 202. The DL signal includes a DL data signal, a DL control signal, and the like.

Reception section 202 applies reception processing, such as amplification and down-conversion, to the radio frequency signal received by antenna 201 and outputs a baseband DL signal to signal separation section 203.

Signal separation section 203 separates (demaps) the DL control signal from the DL signal output from reception section 202 based on the mapping configuration of the DL control signal. Signal separation section 203 outputs the DL control signal separated from the DL signal to demodulation and decoding section 204.

Signal separation section 203 also separates (demaps) the DL data signal from the DL signal based on the scheduling information (for example, assigned resources) input from demodulation and decoding section 204. Signal separation section 203 outputs the DL data signal separated from the DL signal to demodulation and decoding section 204.

Demodulation and decoding section 204 demodulates the DL control signal output from signal separation section 203. Demodulation and decoding section 204 performs blind search described later to apply decoding processing to the demodulated DL control signal and specifies the DL control signal for user terminal 20. Demodulation and decoding section 204 outputs the scheduling information and the like included in the specified DL control signal for user terminal 20 to signal separation section 203. Demodulation and decoding section 204 applies demodulation processing and decoding processing to the DL data signal output from signal separation section 203.

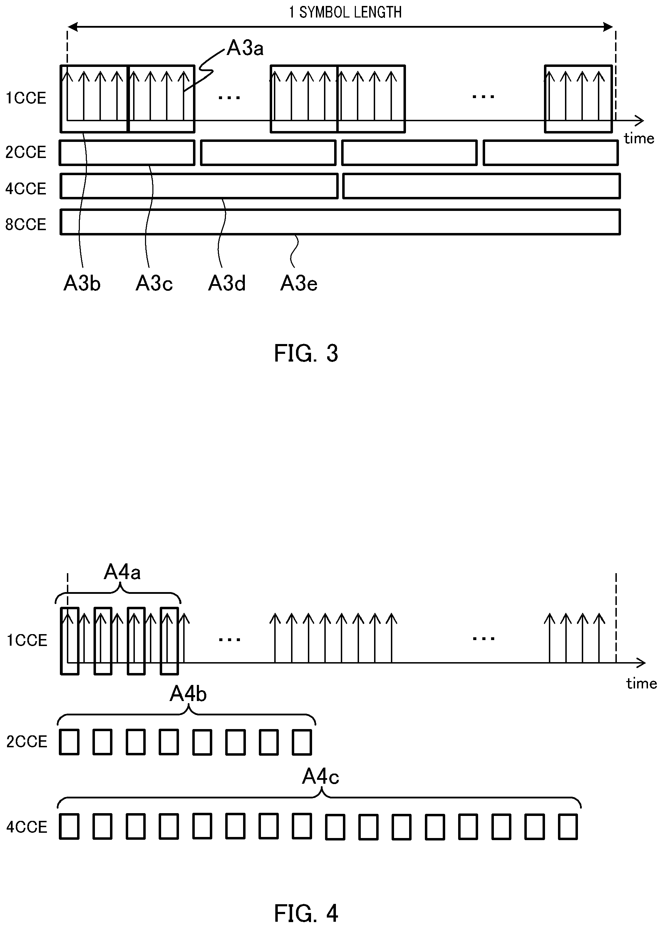

FIG. 3 illustrates a mapping example of the DL control signal according to Embodiment 1. The horizontal axis shown in FIG. 3 indicates a time axis. Arrows A3a shown in FIG. 3 indicate transmission points of the DL signal transmitted by the single carrier. Hereinafter, the transmission points indicated by arrows A3a will be referred to as sample points in some cases. Intervals of the sample points are, for example, "1 / system bandwidth". Note that the transmission points indicated by arrows A3a of FIG. 3 may be referred to as subcarriers, tones, resource elements, components, symbols, mini symbols, or samples. Therefore, the name of the transmission points indicated by arrows A3a in FIG. 3 is not limited to sample points. The transmission points are not limited to the listed names.

A part between dotted lines shown in FIG. 3 indicates one symbol (or may be referred to as a slot or a mini slot) length. 1 subframe (or TTI) (not shown) is formed by a set of a plurality of symbols.

The DL signal is mapped to the sample points indicated by arrows A3a and transmitted to user terminal 20. The DL control signal included in the DL signal is mapped to, for example, the sample points of top two symbols of 1 subframe. The DL data signal included in the DL signal is mapped to, for example, sample points of third and subsequent symbols of 1 subframe. Obviously, the mode of mapping the DL signal to the sample points is not limited to the mapping method described above.

The DL control signal is mapped to the sample points on the basis of CCE (Control Channel Element) including some contiguous sample points. Frame A3b shown in FIG. 3 indicates 1CCE.

The DL control signal is mapped to the sample points in units of CCEs each including, for example, 36 contiguous sample points. Note that FIG. 3 illustrates only 4 sample points in frame A3b due to limitations of space.

For example, the DL control signal is obtained by encoding and modulating 20 DCI bits. Examples of the modulation scheme for modulating the DCI bits include BPSK (binary phase-shift keying), π/2-shift BPSK, QPSK, and π/4-shift QPSK.

The number of bits after encoding the DCI bits is "72 bits". This is modulated by QPSK, and the DCI is indicated by "36 symbols". In this case, the DL control signal (DCI) is mapped in 1CCE including 36 sample points and transmitted to user terminal 20.

In the DL control signal, the CCEs that can be used for mapping are set for each aggregation level. For example, when the aggregation level is "n" (n: 1, 2, 4, 8), n contiguous CCEs with an index corresponding to a multiple of "n" as a start point is assigned to the DL control signal.

More specifically, when the "aggregation level" is "1", sets of 1 contiguous CCE (for example, CCE#0) with CCE#0, #1, #2, ... corresponding to multiples of 1 at the tops are assigned to the DL control signal. The CCE shown in frame A3b indicates a CCE in aggregation level "1".

When the "aggregation level" is "2", sets of 2 contiguous CCEs (for example, CCE#0 and CCE#1) with CCE#0, #2, #4 ... corresponding to multiples of 2 at the tops are assigned to the DL control signal. The CCE shown in frame A3c indicates a CCE in aggregation level "2."

When the "aggregation level" is "4", sets of 4 contiguous CCEs (for example, CCE#0 to CCE#3) with CCE#0, #4, #8, ... corresponding to multiples of 4 at the tops are assigned to the DL control signal. The CCE shown in frame A3d indicates a CCE in aggregation level "4".

When the "aggregation level" is "8," sets of 8 contiguous CCEs (for example, CCE#0 to CCE#7) with CCE#0, #8, #16, ... corresponding to multiples of 8 at the tops are assigned to the DL control signal. The CCE shown in frame A3e indicates a CCE in aggregation level "8."

Although only four 2CCEs are included in 1 symbol length in FIG. 3 due to limitations of space, five or more 2CCEs may be included. Although only two 4CCEs are included in 1 symbol length, three or more 4CCEs may be included. Although only one 8CCE is included in 1 symbol length, two or more 8CCEs may be included.

Radio base station 10 (control section 101) sets a restriction (tree-based structure) on the allocation of CCEs as shown in FIG. 3 and further maps the downlink control signal in a UE search space provided in units of CCEs configured for each user to thereby reduce the number of times of blind decoding by user terminal 20.

For example, the CCEs are mapped to a single carrier in the "tree-based structure" indicated by frames A3b to A3e in FIG. 3. User terminal 20 (demodulation and decoding section 204) can blindly decode the DL control signal in the UE search space (for example, in frames indicated in Modification 2 and the like) provided in units of CCEs, and the load (for example, the number of times the decoding is attempted) of the search processing of the downlink control signal can be reduced.

In this way, the radio communication system maps the DL control signal to the single carrier in units of CCEs based on the tree-based structure. The radio communication system blindly decodes the DL control signal in the UE search space provided in units of CCEs based on the tree-based structure. According to the processing, the radio communication system can reduce the load of the search processing of the DL control signal.

### [Modification 1 of Embodiment 1]

The CCE includes discrete sample points in the blind decoding described in Modification 1 of Embodiment 1.

FIG. 4 illustrates a mapping example of the DL control signal according to Modification 1 of Embodiment 1. Frame A4a shown in FIG. 4 indicates 1CCE including discrete sample points. 1CCE indicated by frame A4a includes discrete sample point in 1 symbol.

Frame A4b shown in FIG. 4 indicates 2CCE including discrete sample points. 2CCE indicated by frame A4b includes discrete sample points in 1 symbol. The configuration of 2CCE is the same as a configuration of a set of two 1CCEs (for example, 1CCE indicated by frame A4a) including discrete sample points in the time direction.

Frame A4c shown in FIG. 4 indicates 4CCE including discrete sample points. 4CCE indicated by frame A4c includes discrete sample points in 1 symbol. The configuration of 4CCE is the same as a configuration of a set of two 2CCEs (for example, 2CCE indicated by frame A4b) including discrete sample points in the time direction.

Although not shown, 8CCE similarly includes discrete sample points. For example, the configuration of 8CCE is the same as a configuration of a set of two 4CCEs (for example 4CCE indicated by frame A4c) including discrete sample points in the time direction.

In this way, the CCE may include discrete sample points. The CCE including the discrete sample points may be mapped to the single carrier under the restriction of the tree-based structure. The radio communication system blindly decodes the DL control signal in the UE search space provided on the basis of CCEs based on the tree-based structure. According to the processing, the radio communication system can reduce the load of the search processing of the DL control signal. The radio communication system can also obtain time diversity of the DL control signal.

### [Modification 2 of Embodiment 1]

The CCE is made up of contiguous sample points and configured in the same symbol in the blind decoding described in Modification 2 of Embodiment 1.

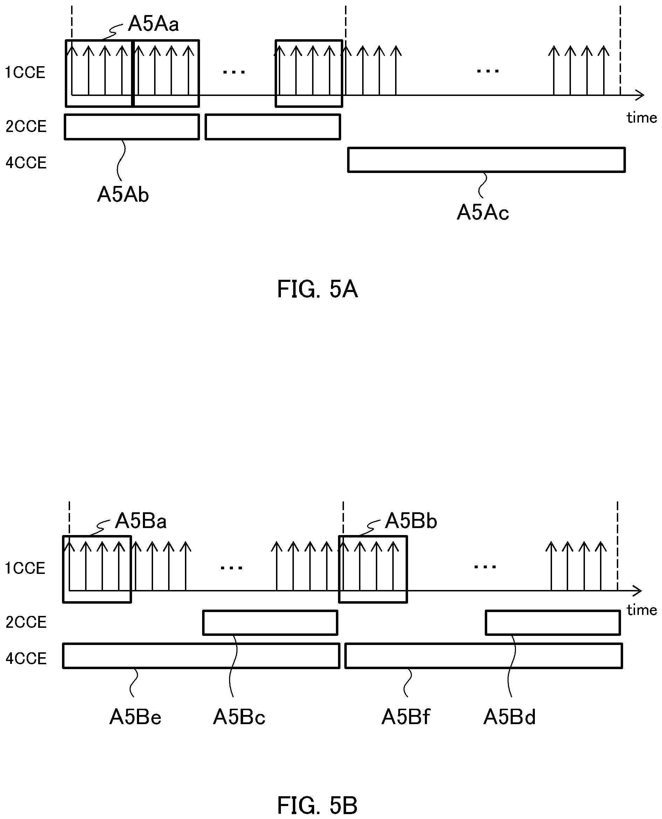

FIGS. 5A and 5B illustrate mapping examples of the DL control signal according to Modification 2 of Embodiment 1. As shown in FIG. 5A, the CCE may be mapped (configured) in a predetermined symbol according to the aggregation level.

For example, frame A5Aa in FIG. 5A indicates a CCE in aggregation level "1." Frame A5Ab in FIG. 5A indicates a CCE in aggregation level "2." As shown in FIG. 5A, the CCEs in aggregation levels "1" and "2" are mapped in the same symbol.

Frame A5Ac in FIG. 5A indicates a CCE in aggregation level "4." As shown in FIG. 5A, the CCE in aggregation level "4" is mapped to a symbol different from the CCEs in aggregation levels "1" and "2." For example, the CCEs in aggregation levels "1" and "2" are mapped to a first symbol, and the CCE in aggregation level "4" is mapped to a second symbol.

Although only two CCEs in aggregation level "2" are included in 1 symbol due to limitations of space, three or more CCEs may be included. Although only one CCE in aggregation level "4" is included in 1 symbol, two or more CCEs may be included. The CCE in aggregation level "8" may also be mapped to, for example, the second symbol just like the CCE in aggregation level "4."

In FIG. 5A, the mapping of the CCE on the symbol is further restricted in the UE search space according to the aggregation level, in addition to the restriction of the tree-based structure of CCE. This also allows the radio communication system to reduce the number of times of blind decoding by user terminal 20.

For example, user terminal 20 applies blind decoding to the UE search space provided in units of CCEs indicated by frames A5Aa and A5Ab of FIG. 5A in the first symbol of the single carrier. User terminal 20 applies blind decoding to the UE search space provided in units of CCEs indicated by frame A5Ac of FIG. 5A in the second symbol of the single carrier. In this way, user terminal 20 can decode the DL control signal in units of CCEs indicated by frames A5Aa to A5Ac in FIG. 5A, and the load of the search processing of the downlink control signal can be reduced.

As shown in FIG. 5B, the same aggregation level may be made up of a plurality of symbols. In this case, the number of candidates for the DL control signal mapped to each symbol is the same.

For example, frames A5Ba and A5Bb indicate CCEs in aggregation level "1." The CCEs in aggregation level "1" are mapped to both of the first symbol and the second symbol as indicated by frames A5Ba and A5Bb. The number of candidates for the DL control signal in aggregation level "1" mapped to each symbol is the same. In the example of FIG. 5B, 1CCE is included in each of the first symbol and the second symbol. Note that two or more 1CCEs may be included in each symbol.

Frames A5Bc and A5Bd indicate CCEs in aggregation level "2." The CCEs in aggregation level "2" are mapped to both of the first symbol and the second symbol as indicated by frames A5Bc and A5Bd. The number of candidates for the DL control signal in aggregation level "2" mapped to each symbol is the same. In the example of FIG. 5B, one 2CCE is included in each of the first symbol and the second symbol. Note that two or more 2CCEs may be included in each symbol.

Frames A5Be and A5Bf indicate CCEs in aggregation level "4." The CCEs in aggregation level "4" are mapped to both of the first symbol and the second symbol as indicated by frames A5Be and A5Bf. The number of candidates for the DL control signal in aggregation level "4" mapped to each symbol is the same. In the example of FIG. 5B, one 4CCE is included in each of the first symbol and the second symbol. Note that two or more 4CCEs may be included in each symbol.

Although not illustrated in FIG. 5B, the same number of CCEs in aggregation level "8" are also mapped to each of a plurality of symbols as described above.

In FIG. 5B, the UE search space is further configured across the symbols such that the number of CCEs is equal in each symbol, in addition to the restriction of the tree-based structure. According to the processing, the radio communication system can reduce the number of times of blind decoding by user terminal 20. For example, user terminal 20 can perform the blind decoding on the basis of CCEs of frames A5Ba to A5Bf indicated in FIG. 5B.

In this way, the radio communication system maps the DL control signal to the single carrier on the basis of CCEs configured based on the tree-based structure. The radio communication system blindly decodes the DL control signal in the UE search space provided on the basis of CCEs based on the tree-based structure across a plurality of symbols. For example, user terminal 20 decodes the DL control signal in frames A5Aa to A5Ac indicated in FIG. 5A. Alternatively, user terminal 20 decodes the DL control signal in frames A5Ba to A5Bf indicated in FIG. 5B. According to the processing, the radio communication system can reduce the load of the search processing of the DL control signal.

Note that the type of UE search space for decoding may be fixed, or the radio communication system (user terminal 20) may decide the type of UE search space based on one or both of the subframe number and the UE-ID (identification information of user terminal). For example, the UE search space including the CCEs made up of contiguous sample points and configured in the same symbol as indicated by frames A5Aa to A5Ac in FIG. 5A may be fixed for each user terminal or may be decided based on one or both of the subframe number and the UE-ID (identification information of user terminal). The same applies hereinafter.

### [Modification 3 of Embodiment 1]

The CCEs are made up of discrete sample points and configured across a plurality of symbols in the blind decoding described in Modification 3 of Embodiment 1.

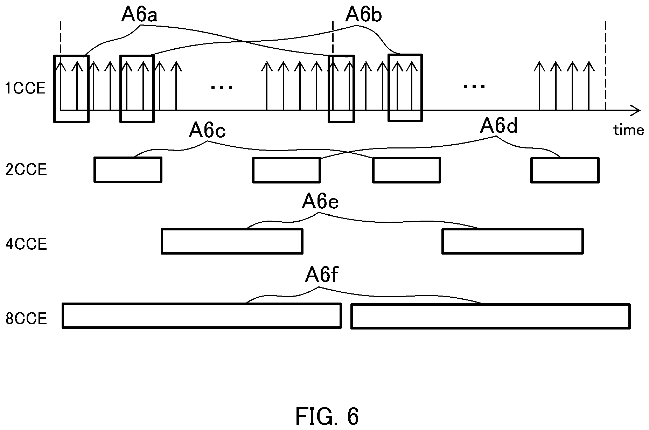

FIG. 6 illustrates a mapping example of the DL control signal according to Modification 3 of Embodiment 1. Frames A6a shown in FIG. 6 indicate 1CCE including discrete sample points. 1CCE indicated by frames A6a includes discrete sample points across 2 symbols. The number of sample points of 1CCE across 2 symbols is the same in each symbol (two in the example of FIG. 6).

1CCE indicated by frames A6b also includes discrete sample points across 2 symbols just like frames A6a. Although FIG. 6 illustrates only two 1CCEs (1CCE indicated by frames A6a and 1CCE indicated by frames A6b), three or more 1CCEs may be included across 2 symbols.

Frames A6c shown in FIG. 6 indicate 2CCE including discrete sample points. 2CCE indicated by frames A6c include discrete sample points across 2 symbols. The number of sample points (not shown) of 2CCE across 2 symbols is the same in each symbol. Although FIG. 6 illustrates only two 2CCEs (2CCE indicated by frames A6c and 2CCE indicated by frames A6d), three or more 2CCEs may be included across 2 symbols.

2CCE indicated by frames A6d also includes discrete sample points across 2 symbols just like frames A6c. Although FIG. 6 illustrates only two 2CCEs (2CCE indicated by frames A6c and 2CCE indicated by frames A6d), three or more 2CCEs may be included across 2 symbols.

Frames A6e shown in FIG. 6 indicate 4CCE including discrete sample points. 4CCE indicated by frames A6e include discrete sample points across 2 symbols. The number of samples points (not shown) of 4CCE across 2 symbols is the same in each symbol. Although FIG. 6 illustrates only one 4CCE (4CCE indicated by frames A6e), two or more 4CCEs may be included across 2 symbols.

Frames A6f shown in FIG. 6 indicate 8CCE including discrete sample points. 8CCE indicated by frames A6f include discrete sample points across 2 symbols. The number of sample points (not shown) of 8CCE across 2 symbols is the same. Although FIG. 6 illustrates only one 8CCE (8CCE indicated by frames A6f), two or more 8CCEs may be included across 2 symbols.

In FIG. 6, the UE search space further includes CCEs made up of discrete sample points and configured across a plurality of symbols (across 2 symbols in the example of FIG. 6), in addition to the restriction of the tree-based structure. According to the configuration, the radio communication system can reduce the number of times of blind decoding by user terminal 20. For example, user terminal 20 can perform blind decoding in the UE search space of frames A6a to A6f shown in FIG. 6 provided on the basis of CCEs.

In this way, the radio communication system maps the DL control signal to the single carrier in units of CCEs made up of discrete sample points and configured across a plurality of symbols. The radio communication system blindly decodes the DL control signal in the UE search space provided in units of CCEs made up of discrete sample points and configured across a plurality of symbols. According to the processing, the radio communication system can reduce the load of the search processing of the DL control signal. The radio communication system can also obtain time diversity of the DL control signal.

### [Modification 4 of Embodiment 1]

In the blind decoding described in Modification 4 of Embodiment 1, the DL control signal is transmitted in a first time region in the symbol, and the DL control signal is not transmitted in a second time region other than the first time region.

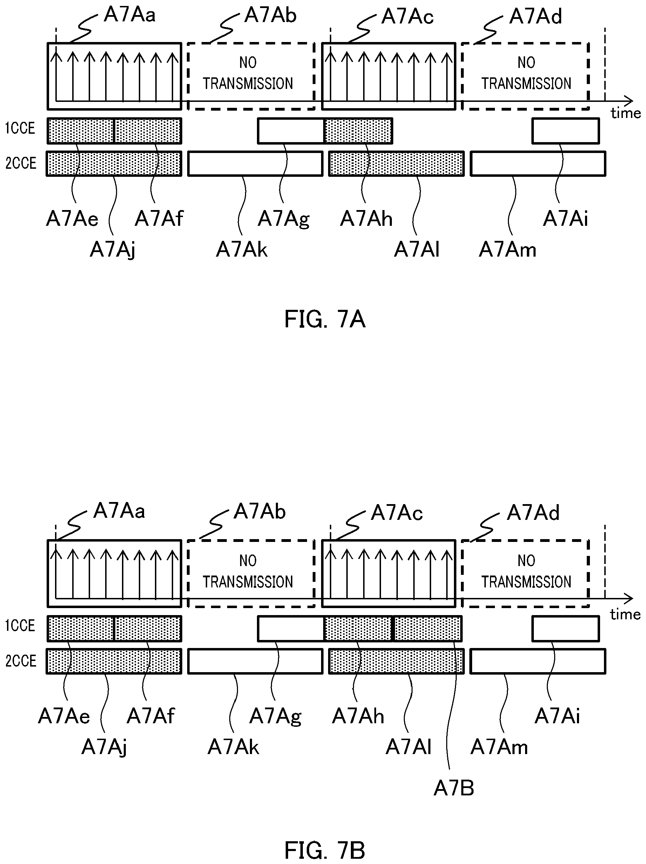

FIGS. 7A and 7B illustrate mapping examples of the DL control signal according to Modification 4 of Embodiment 1. The symbol is divided into a time region in which the DL control signal is transmitted and a time region in which the DL control signal is not transmitted. For example, frame A7Aa shown in FIG. 7A indicates a time region of a first symbol in which the DL control signal is transmitted, and dotted frame A7Ab indicates a time region of the first symbol in which the DL control signal is not transmitted. Frame A7Ac shown in FIG. 7A indicates a time region of a second symbol in which the DL control signal is transmitted, and dotted frame A7Ad indicates a time region of the second symbol in which the DL control signal is not transmitted.

Frames A7Ae to A7Am shown in FIG. 7A indicate predefined CCEs (UE search space) to be blindly decoded. Frames A7Ae to A7Ai indicate CCEs in aggregation level "1", and frames A7Aj to A7Am indicate CCEs in aggregation level "2."

User terminal 20 fundamentally decodes the DL control signal on the basis of predefined CCEs of frames A7Ae to A7Am. However, when the symbol includes the time region in which the DL control signal is transmitted and the time region in which the DL control signal is not transmitted, user terminal 20 performs the blind decoding in the predefined CCEs of the time region in which the DL control signal is transmitted. In the example of FIG. 7A, user terminal 20 performs the blind decoding in the CCEs of frames A7Ae, A7Af, A7Ah, A7Aj, and A7A1.

In this way, the radio communication system performs the blind decoding in the CCEs of the time region in which the DL control signal is transmitted. According to the processing, the radio communication system can reduce the load of the search processing of the DL control signal.

The CCEs to be blindly decoded are predefined in FIG. 7A. However, when the DL control signal is transmitted in the time region of part of the symbol, the CCEs to be blindly decoded may be newly defined in the time region in which the DL control signal is transmitted.

In FIG. 7B, the same reference signs are provided to the same frames as in FIG. 7A. As indicated by frame A7B, the CCE to be blindly decoded may be newly defined in the time region in which the DL control signal indicated by frame A7Ac of FIG. 7B is transmitted.

In this way, the radio communication system may newly define the CCE to be blindly decoded in the time region in which the DL control signal is transmitted. According to the processing, the radio communication system can flexibly configure the UE search space.

### [Modification 5 of Embodiment 1]

The DL control signal is repeatedly transmitted in the blind decoding described in Modification 5 of Embodiment 1.

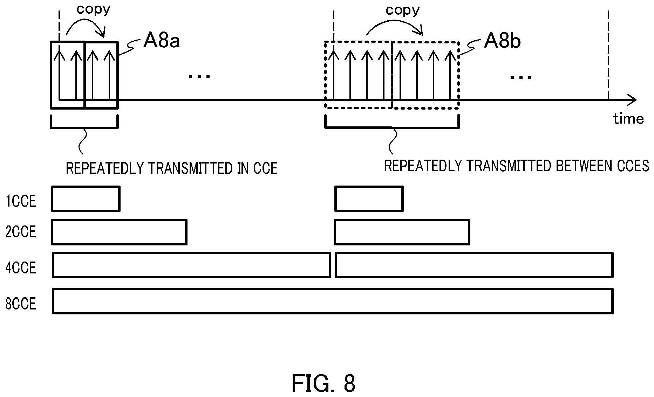

FIG. 8 illustrates a mapping example of the DL control signal according to Modification 5 of Embodiment 1. Frame A8a shown in FIG. 8 indicates an example in which the DL control signal is repeated (copied) in 1CCE. Although only 4 sample points are illustrated in frame A8a due to limitations of space, 1CCE includes, for example, 36 sample points.

Note that in 2CCE, the DL control signal is also repeated in 2CCE as in 1CCE. In 4CCE, the DL control signal is also repeated in 4CCE as in 1CCE. In 8CCE, the DL control signal is also repeated in 8CCE as in 1CCE.

Dotted frame A8b shown in FIG. 8 illustrates an example in which the DL control signal is repeated (copied) between CCEs. Although only 8 sample points are illustrated in dotted frame A8b due to limitations of space, 2CCE includes, for example 72 sample points.

Note that in 4CCE, the DL control signal is also repeated between 2 CCEs as in 2CCE. In 8CCE, the DL control signal is also repeated between 4CCEs as in 2CCE.

In this way, the DL control signal may be repeated in the CCE. The DL control signal may also be repeatedly mapped between CCEs. According to the mapping, the radio communication system can increase reception SN based on the composition of the DL control signal.

User terminal 20 can also blindly decode 2CCE based on the result of the blind decoding of 1CCE. User terminal 20 can also blindly decode 4CCE based on the result of the blind decoding of 2CCE. User terminal 20 can further blindly decode 8CCE based on the result of the blind decoding of 4CCE. According to the processing, the radio communication system can reduce the load of the search processing of the DL control signal.

### [Modification 6 of Embodiment 1]

In the blind decoding described in Modification 6 of Embodiment 1, the DL control signals of a plurality of subframes are collectively transmitted in one subframe.

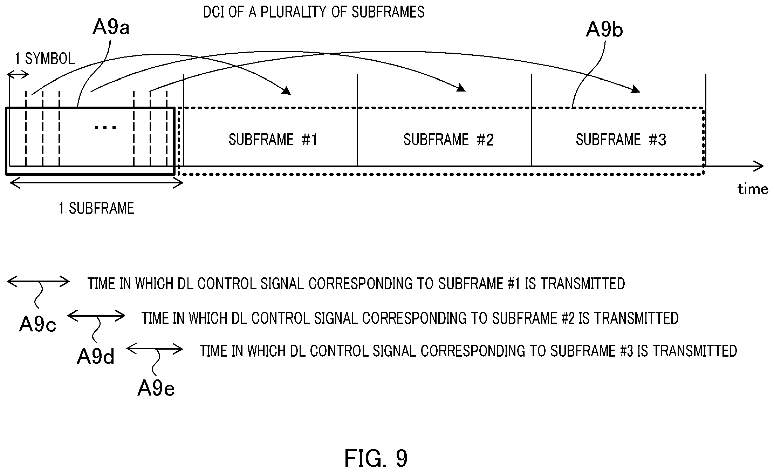

FIG. 9 illustrates a mapping example of the DL control signal according to Modification 6 of Embodiment 1. Frame A9a shown in FIG. 9 indicates a subframe provided with the DL control signals. Dotted frame A9b indicates subframes provided with the DL data signals. The subframes provided with the DL data signals indicated by dotted frame A9b follow the subframe provided with the DL control signals indicated by frame A9a.

The DL control signals of the subframes provided with the DL data signals are collectively mapped in the subframe provided with the DL control signals. More specifically, the DL control signals of the DL data signals of the plurality of subframes indicated by dotted frame A9b are collectively mapped in the subframe indicated by frame A9a.

The DL control signal of a first subframe indicated in dotted frame A9b is mapped in, for example, a time region indicated by double-headed arrow A9c of the subframe indicated by frame A9a. The DL control signal of a second subframe indicated in dotted frame A9b is mapped in, for example, a time region indicated by double-headed arrow A9d of the subframe indicated by frame A9a. The DL control signal of a third subframe indicated in dotted frame A9b is mapped in, for example, a time region indicated by double-headed arrow A9e of the subframe indicated by frame A9a. Note that the DL control signals assigned to the subframe indicated by frame A9a configure the UE search space in units of CCEs based on the tree-based structure and are mapped to the single carrier.

In this way, the DL control signals of the DL data signals of the plurality of subframes are mapped in a specific subframe. The DL control signals mapped in the specific subframe constitute the UE search space in units of CCEs based on the tree-based structure and are mapped to the single carrier. According to the processing, the radio communication system can reduce the number of times of blind decoding.

### [Embodiment 2]

Hereinafter, Embodiment 2 will be descried with reference to the accompanying drawings. In Embodiment 2, the DL control signal mapped in contiguous frequency regions (frequency bands) is blindly decoded.

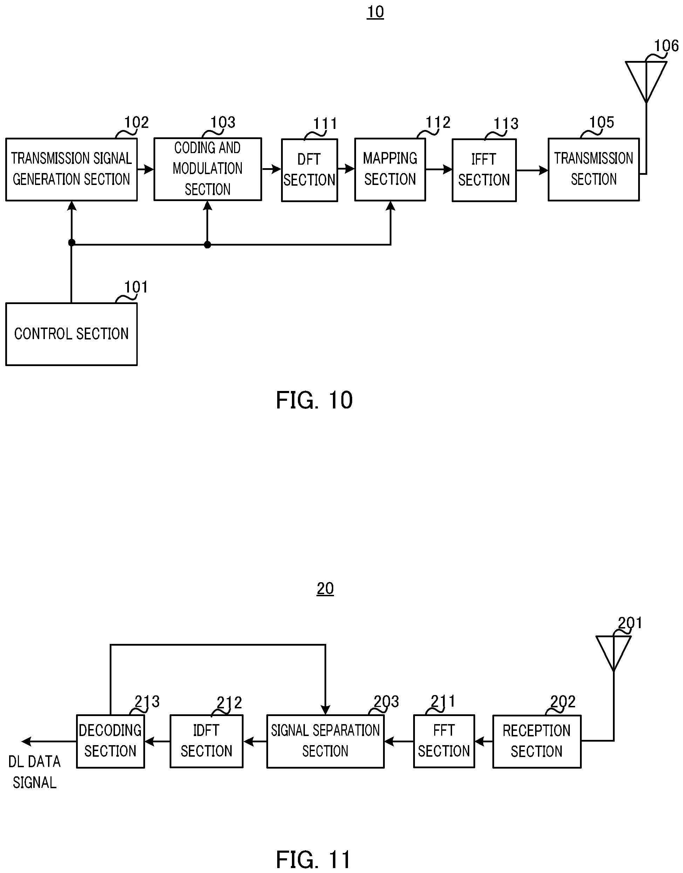

FIG. 10 illustrates a configuration example of functional blocks of the radio base station according to Embodiment 2. In FIG. 10, the same reference signs are provided to the same functional blocks as in FIG. 1. Hereinafter, parts different from FIG. 1 will be described.

As shown in FIG. 10, radio base station 10 includes DFT section 111, mapping section 112, and IFFT (Inverse Fast Fourier Transform) section 113.

DFT section 111 uses DFT to convert a DL signal output from coding and modulation section 103 into a signal in frequency domains. Mapping section 112 maps the DL signal converted into the frequency domains by DFT section 111 on subcarriers. Mapping section 112 maps the DL signal on contiguous subcarriers to maintain the low PAPR of DFT Spread OFDM.

IFFT section 113 converts the DL signal in a plurality of frequency domains mapped on the contiguous subcarriers into a signal in time domains. Therefore, radio base station 10 performs DFT Spread OFDM (Orthogonal Frequency Division Multiplexing) of the DL signal.

FIG. 11 illustrates a configuration example of functional blocks of the user terminal according to Embodiment 2. In FIG. 11, the same reference signals are provided to the same functional blocks as in FIG. 2. Parts different from FIG. 2 will be described below.

As shown in FIG. 11, user terminal 20 includes FFT section 211, IDFT (Inverse DFT) section 212, and decoding section 213.

FFT section 211 uses FFT to convert a DL signal output from reception section 202 into a signal in frequency domains. FFT section 211 demaps the signal in the frequency domains from subcarriers and outputs the signal to signal separation section 203.

IDFT section 212 uses IDFT to convert the DL control signal and the DL data signal in the frequency domains separated by signal separation section 203 into signals in time domains. Decoding section 213 decodes the DL control signal and the DL data signal converted into the time domains. Decoding section 213 outputs the scheduling information and the like included in the DL control signal for user terminal 20 to signal separation section 203.

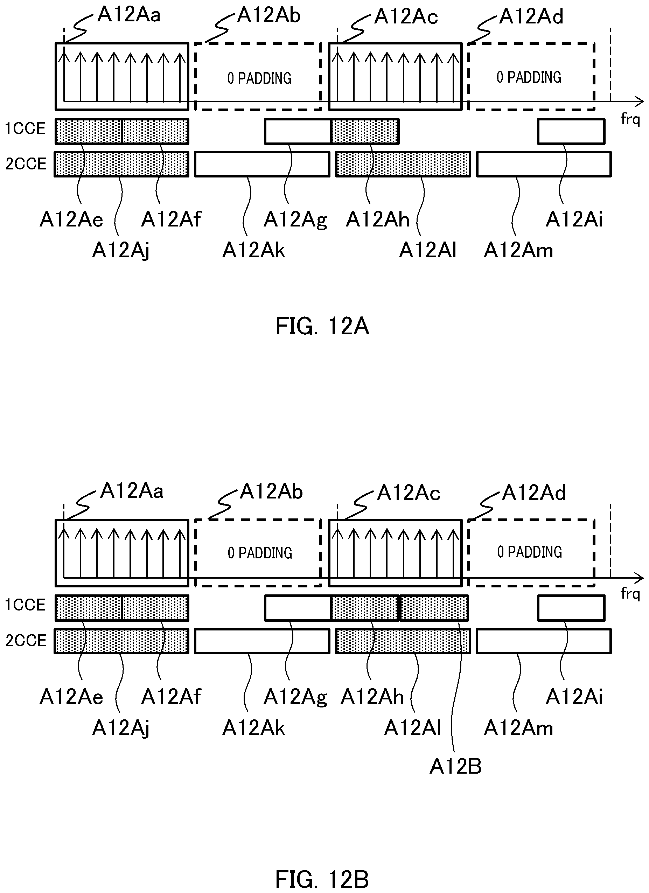

FIGS. 12A and 12B illustrate a mapping example of the DL control signal according to Embodiment 2. The horizontal axis shown in FIG. 12A and FIG. 12B indicates a frequency axis.

The radio resources are divided into frequency domains in which the DL control signal is transmitted and frequency domains in which the DL control signal is not transmitted. For example, frames A12Aa and A12Ac shown in FIG. 12A indicate the frequency domains in which the DL control signal is transmitted, and dotted frames A12Ab and A12Ad indicate the frequency domains in which the DL control signal is not transmitted.

Frames A12Ae to A12Am shown in FIG. 12A indicate predefined CCEs (UE search space) to be blindly decoded. Frames A12Ae to A12Ai indicate CCEs in aggregation level "1," and frames A12Aj to A12Am indicate CCEs in aggregation level "2."

User terminal 20 decodes the DL control signal in units of the predefined CCEs of frames A12Ae to A12Am. However, when the symbol includes the frequency domain in which the DL control signal is transmitted and the frequency domain in which the DL control signal is not transmitted, user terminal 20 performs the blind decoding in the predefined CCEs of the frequency domain in which the DL control signal is transmitted. In the example of FIG. 12A, user terminal 20 performs the blind decoding in the CCEs of frames A12Ae, A12Af, A12Ah, A12Aj, and A12A1.

In this way, the radio communication system performs the blind decoding in the UE search space configuration defined by the CCEs in the frequency domain in which the DL control signal is transmitted. According to the processing, the radio communication system can reduce the load of the search processing of the DL control signal.

The CCEs to be blindly decoded are predefined in FIG. 12A. However, when the DL control signal is transmitted in the frequency domain of part of the radio resources, the radio communication system may newly define the CCEs to be blindly decoded in the frequency domain in which the DL control signal is transmitted.

For example, in FIG. 12B, the same reference signs are provided to the same frames as in FIG. 12A. As indicated by frame A12B, the radio communication system may newly define the CCE to be blindly decoded in the frequency domain in which the DL control signal indicated by frame A12Ac of FIG. 12B is transmitted.

In this way, the radio communication system may newly define the CCE to be blindly decoded in the frequency domain in which the DL control signal is transmitted. According to the processing, the radio communication system can flexibly configure the CCE.

### [Embodiment 3]

Hereinafter, Embodiment 3 will be described with reference to the accompanying drawings. MIMO (Multiple Input Multiple Output) is applied to a radio communication system in a case described in Embodiment 3.

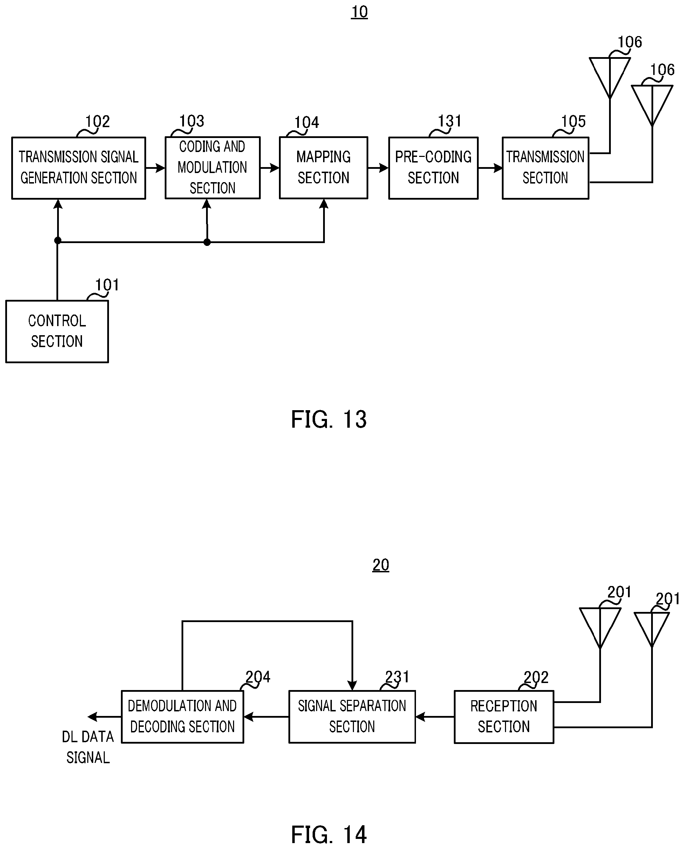

FIG. 13 illustrates a configuration example of functional blocks of the radio base station according to Embodiment 3. In FIG. 13, the same reference signs are provided to the same functional blocks as in FIG. 1. Parts different from FIG. 1 will be described below.

Radio base station 10 includes pre-coding section 131. For each antenna port, pre-coding section 131 applies pre-coding processing to the DL signal output from mapping section 104.

FIG. 14 illustrates a configuration example of functional blocks of the user terminal according to Embodiment 3. In FIG. 14, the same reference signs are provided to the same functional blocks as in FIG. 1. Parts different from FIG. 2 will be described below.

Signal separation section 231 separates the spatially multiplexed DL signals. User terminal 20 also includes, for example, a transmission section not shown and feeds back information necessary for the MIMO communication to radio base station 10.

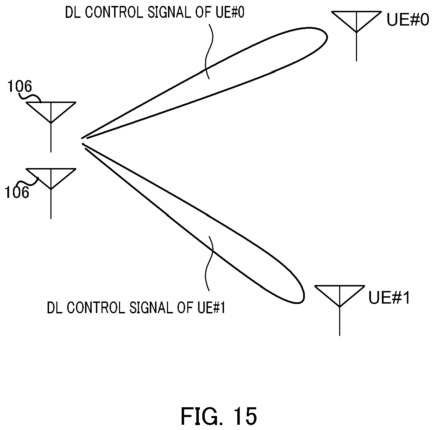

FIG. 15 is a diagram describing transmission of the DL control signals when MIMO is applied. FIG. 15 illustrates antennas 106 of radio base station 10 shown in FIG. 13. FIG. 15 also illustrates an antenna of user terminal UE#0 and an antenna of user terminal UE#1.

As shown in FIG. 15, the DL control signal addressed to user terminal UE#0 is assigned to a layer of MIMO formed between radio base station 10 and user terminal UE#0. The DL control signal addressed to user terminal UE#1 is assigned to a layer of MIMO formed between radio base station 10 and user terminal UE#1. In this way, the DL control signal addressed to each user may be assigned to a layer of MIMO formed between radio base station 10 and each user terminal.

User terminal UE#0 performs blind decoding in the MIMO layer formed between radio base station 10 and user terminal UE#0. User terminal UE#1 performs blind decoding in the MIMO layer formed between radio base station 10 and user terminal UE#1.

In this way, the radio communication system configures the UE search space in units of CCEs based on the tree-based structure and maps the DL control signal to the single carrier in the MIMO layer formed for each user terminal. According to the processing, the radio communication system can reduce the load of the search processing of the DL control signal.

This completes the description of embodiments of the present invention.

An example of hardware configuration of radio base station 10 and user terminal 20 will be described below. The functional block diagrams used to describe embodiments illustrate blocks on the basis of functions. The functional blocks (constituent sections) are realized by an arbitrary combination of hardware and/or software. Means for realizing the functional blocks is not particularly limited. More specifically, the functional blocks may be realized by one physically and/or logically coupled apparatus. Two or more physically and/or logically separated apparatuses may be directly and/or indirectly (for example, through a cable and/or wirelessly) connected, and the plurality of apparatuses may realize the functional blocks.

For example, the radio base station, the user terminal, or the like in an embodiment of the present invention may function as a computer that executes processing of the radio communication method of the present invention.

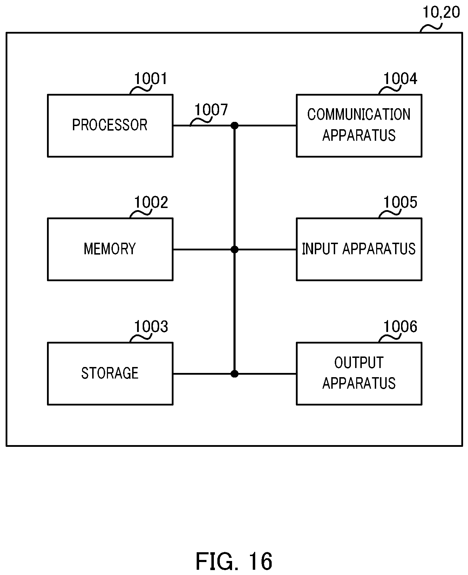

FIG. 16 illustrates an example of a hardware configuration of the radio base station and the user terminal according to one embodiment of the present invention. Radio base station 10 and user terminal 20 may be physically constituted as a computer apparatus including processor 1001, memory 1002, storage 1003, communication apparatus 1004, input apparatus 1005, output apparatus 1006, bus 1007, and the like.

Note that the term "apparatus" in the following description can be replaced with a circuit, a device, a unit, or the like. The hardware configurations of radio base station 10 and user terminal 20 may include one or a plurality of apparatuses illustrated in the drawings or may not include part of the apparatuses.

For example, although only one processor 1001 is illustrated, there may be a plurality of processors. The processing may be executed by one processor, or the processing may be executed by one or more processors at the same time, in succession, or by other methods. Note that processor 1001 may be provided by one or more chips.

The functions of radio base station 10 and user terminal 20 are realized by loading predetermined software (program) on the hardware of processor 1001, memory 1002, or the like. Processor 1001 performs operation, and the communication by communication apparatus 1004 or reading and/or writing of data in memory 1002 and storage 1003 is controlled.

Processor 1001 operates, for example, an operating system to control the entire computer. Processor 1001 may be constituted by a central processing unit (CPU) including an interface for peripheral apparatus, a control apparatus, an operation apparatus, a register, and the like. For example, control section 101, transmission signal generation section 102, coding and modulation section 103, mapping section 104, signal separation section 203, demodulation and decoding section 204, and the like may be realized by processor 1001.

Processor 1001 executes various types of processing according to a program (program code), a software module, or data loaded from storage 1003 and/or communication apparatus 1004 to memory 1002. The program used is a program for causing the computer to execute at least part of the operation described in embodiments. For example, control section 101 of radio base station 10 may be realized by a control program stored in memory 1002 and operated by processor 1001, and the other functional blocks may also be realized in the same way. Although the various types of processing are executed by one processor 1001 in the description, the various types of processing may be executed by two or more processors 1001 at the same time or in succession. Processor 1001 may be provided by one or more chips. Note that the program may be transmitted from a network through a telecommunication line.

Memory 1002 is a computer-readable recording medium and may be constituted by, for example, at least one of a ROM (Read Only Memory), an EPROM (Erasable Programmable ROM), an EEPROM (Electrically Erasable Programmable ROM), and a RAM (Random Access Memory). Memory 1002 may be called a register, a cache, a main memory (main storage apparatus), or the like. Memory 1002 can save a program (program code), a software module, and the like that can be executed to carry out the radio communication method according to one embodiment of the present invention.

Storage 1003 is a computer-readable recording medium and may be constituted by, for example, at least one of an optical disk such as a CD-ROM (Compact Disc ROM), a hard disk drive, a flexible disk, a magneto-optical disk (for example, a compact disc, a digital versatile disk, or a Blue-ray (registered trademark) disk), a smart card, a flash memory (for example, a card, a stick, or a key drive), a floppy (registered trademark) disk, and a magnetic strip. Storage 1003 may be called an auxiliary storage apparatus. The storage medium may be, for example, a database, a server, or other appropriate media including memory 1002 and/or storage 1003.

Communication apparatus 1004 is hardware (transmission and reception device) for communication between computers through a wired and/or wireless network and is also called, for example, a network device, a network controller, a network card, or a communication module. For example, transmission section 105, antenna 106, antenna 201, reception section 202, and the like may be realized by communication apparatus 1004.

Input apparatus 1005 is an input device (for example, a keyboard, a mouse, a microphone, a switch, a button, or a sensor) that receives input from the outside. Output apparatus 1006 is an output device (for example, a display, a speaker, or an LED lamp) for output to the outside. Note that input apparatus 1005 and output apparatus 1006 may be integrated (for example, a touch panel).

The apparatuses, such as processor 1001 and memory 1002, are connected by bus 1007 for communication of information. Bus 1007 may be set by a single bus or may be set by different buses between the apparatuses.

Furthermore, radio base station 10 and user terminal 20 may include hardware, such as a microprocessor, a digital signal processor (DSP), an ASIC (Application Specific Integrated Circuit), a PLD (Programmable Logic Device), and an FPGA (Field Programmable Gate Array), and the hardware may realize part or all of the functional blocks. For example, processor 1001 may be provided by at least one of these pieces of hardware.

### (Modifications of Present Embodiment)

Note that the terms described in the present specification and/or the terms necessary to understand the present specification may be replaced with terms with the same or similar meaning. For example, the channel and/or the symbol may be a signal. The signal may be a message.

The DL data signal may be called a physical downlink shared channel (PDSCH) or a downlink data channel. The DL control signal may be called a physical downlink control channel (PDCCH) or a downlink control channel.

The radio frame may be constituted by one or a plurality of frames in the time domain. One or each of a plurality of frames may be called a subframe, a time unit, or the like in the time domain. The sub frame may be further constituted by one or a plurality of slots in the time domain. One subframe may be called a TTI. A plurality of contiguous subframes may be called a TTI. One slot may be called a TTI.

The notification of information is not limited to the modes and embodiments described in the present specification, and the information may be notified by other methods. For example, the notification of information may be carried out by one or a combination of physical layer signaling (for example, DCI (Downlink Control Information) and UCI (Uplink Control Information)), higher layer signaling (for example, RRC (Radio Resource Control) signaling, MAC (Medium Access Control) signaling, broadcast information (MIB (Master Information Block), and SIB (System Information Block))), and other signals. The RRC signaling may be called an RRC message and may be, for example, an RRC connection setup message, an RRC connection reconfiguration message, or the like.

The aspects and embodiments described in the present specification may be applied to a system using LTE (Long Term Evolution), LTE-A (LTE-Advanced), SUPER 3G, IMT-Advanced, 4G, 5G, FRA (Future Radio Access), W-CDMA (registered trademark), GSM (registered trademark), CDMA2000, UMB (Ultra Mobile Broadband), IEEE 802.11 (Wi-Fi), IEEE 802.16 (WiMAX), IEEE 802.20, UWB (Ultra-WideBand), Bluetooth (registered trademark), or other appropriate systems and/or to a next-generation system expanded based on these.

The base station (radio base station) can accommodate one or a plurality of (for example, three) cells (also called sectors). When the base station accommodates a plurality of cells, the entire coverage area of the base station can be divided into a plurality of smaller areas, and each smaller area can provide a communication service based on a base station subsystem (for example, small base station for indoor, RRH: Remote Radio Head). The term "cell" or "sector" denotes the base station that performs the communication service in the coverage and/or part or all of the coverage area of the base station subsystem. Furthermore, the terms "base station", "eNB", "cell", and "sector" can be interchangeably used in the present specification. The base station may be called a fixed station, a NodeB, an eNodeB (eNB), an access point, a femto cell, a small cell, or the like.

The user terminal may be called, by those skilled in the art, a mobile station, a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or UE (User Equipment) or by some other appropriate terms.

Furthermore, the radio base station in the present specification may be replaced with the user terminal. For example, the modes and embodiments of the present invention may be applied to a configuration in which the communication between the radio base station and the user terminal is replaced with communication between a plurality of user terminals (D2D: Device-to-Device). In this case, user terminal 20 may be provided with the functions of radio base station 10. Furthermore, the term "uplink", "downlink", or the like may be replaced with "side". For example, the uplink channel may be replaced with a side channel.

Similarly, the user terminal in the present specification may be replaced with the radio base station. In this case, radio base station 10 may be provided with the functions of user terminal 20.

Specific operations performed by the base station (radio base station) in the specification may be performed by an upper node depending on the situation. Various operations performed for communication with a terminal in a network including one or a plurality of network nodes including a base station can be obviously performed by the base station and/or a network node other than the base station (examples include, but not limited to, MME (Mobility Management Entity) or S-GW (Serving Gateway)). Although there is one network node other than the base station in the case illustrated above, a plurality of other network nodes may be combined (for example, MME and S-GW).

The information, the signal, and the like can be output from a higher layer (or a lower layer) to a lower layer (or a higher layer). The information, the signals, and the like may be input and output through a plurality of network nodes.

The input and output information and the like may be saved in a specific place (for example, memory) or may be managed by a management table. The input and output information and the like can be overwritten, updated, or additionally written. The output information and the like may be deleted. The input information and the like may be transmitted to another apparatus.

The judgement may be made based on a value expressed by 1 bit (0 or 1), based on a Boolean value (true or false), or based on comparison with a numerical value (for example, comparison with a predetermined value).

As used herein, the term "determining" may encompasses a wide variety of actions. For example, "determining" may be regarded as judging, calculating, computing, processing, deriving, investigating, looking up (e.g., looking up in a table, a database or another data structure), ascertaining and the like. Also, "determining" may be regarded as receiving (e.g., receiving information), transmitting (e.g., transmitting information), inputting, outputting, accessing (e.g., accessing data in a memory) and the like. Also, "determining" may be regarded as resolving, selecting, choosing, establishing and the like. That is, "determining" may be regarded as a certain type of action related to determining.

The terms "connected" and "coupled" as well as any modifications of the terms mean any direct or indirect connection and coupling between two or more elements, and the terms can include cases in which one or more intermediate elements exist between two "connected" or "coupled" elements. The coupling or the connection between elements may be physical or logical coupling or connection or may be a combination of physical and logical coupling or connection. When used in the present specification, two elements can be considered to be "connected" or "coupled" to each other by using one or more electrical wires, cables, and/or printed electrical connections or by using electromagnetic energy, such as electromagnetic energy with a wavelength of a radio frequency domain, a microwave domain, or an optical (both visible and invisible) domain that are non-limited and non-inclusive examples.

The terms "including", "comprising", and modifications of these are intended to be inclusive just like the term "having", as long as the terms are used in the present specification or the appended claims. Furthermore, the term "or" used in the present specification or the appended claims is not intended to be an exclusive or.

The description "based on" used in the present specification does not mean "only based on", unless otherwise specifically stated. In other words, the description "based on" means both of "only based on" and "at least based on."

The "section" in the configuration of each apparatus may be replaced with "means," "circuit," "device," or the like.

When articles, such as "a," "an," and "the" in English, are added by translation in the entire disclosure, the articles include plural forms unless otherwise clearly indicated by the context.

Regardless of whether the software is called software, firmware, middleware, a microcode, or a hardware description language or by other names, the software should be broadly interpreted to mean an instruction, an instruction set, a code, a code segment, a program code, a program, a subprogram, a software module, an application, a software application, a software package, a routine, a subroutine, an object, an executable file, an execution thread, a procedure, a function, and the like.

The software, the command, and the like may be transmitted and received through a transmission medium. For example, when the software is transmitted from a website, a server, or other remote sources by using a wired technique, such as a coaxial cable, an optical fiber cable, a twisted pair, and a digital subscriber line (DSL), and/or a wireless technique, such as an infrared ray, a radio wave, and a microwave, the wired technique and/or the wireless technique is included in the definition of the transmission medium.

The information, the signals, and the like described in the present specification may be expressed by using any of various different techniques. For example, data, instructions, commands, information, signals, bits, symbols, chips, and the like that may be mentioned throughout the entire description may be expressed by one or an arbitrary combination of voltage, current, electromagnetic waves, magnetic fields, magnetic particles, optical fields, and photons.

The terms "system" and "network" used in the present specification can be interchangeably used.

The information, the parameters, and the like described in the present specification may be expressed by absolute values, may be expressed by values relative to predetermined values, or expressed by other corresponding information. For example, radio resources may be indicated by indices.

The names used for the parameters are not limited in any respect. Furthermore, the numerical formulas and the like using the parameters may be different from the ones explicitly disclosed in the present specification. Various channels (for example, PUCCH and PDCCH) and information elements (for example, TPC) can be identified by any suitable names, and various names allocated to these various channels and information elements are not limited in any respect.

The orders of the processing procedures, the sequences, the flow charts, and the like of the aspects and embodiments described in the present specification may be changed as long as there is no contradiction. For example, elements of various steps are presented in exemplary orders in the methods described in the present specification, and the methods are not limited to the presented specific orders.

The aspects and embodiments described in the present specification may be independently used, may be combined and used, or may be switched and used along the execution. Furthermore, notification of predetermined information (for example, notification indicating "it is X") is not limited to explicit notification, and the notification of the predetermined information may be implicit (for example, by not notifying the predetermined information).

Although the present invention has been described in detail, it is obvious for those skilled in the art that the present invention is not limited to embodiments described in the present specification. Modified and changed modes of the present invention can be carried out without departing from the spirit and the scope of the present invention defined by the description of the appended claims. Therefore, the description of the present specification is intended for exemplary description and does not limit the present invention in any sense.

### Industrial Applicability

An aspect of the present invention is useful for a mobile communication system.

The present patent application claims the benefit of priority based on Japanese Patent Application Laid-Open No. 2016-245979 field on December 19, 2016, and the entire content of Japanese Patent Application Laid-Open No. 2016-245979 is hereby incorporated by reference.

### Reference Signs List

- 10: Radio base station
- 101: Control section
- 102: Transmission signal generation section
- 103: Coding and modulation section
- 104: Mapping section
- 105: Transmission section
- 106: Antenna
- 20: User terminal
- 201: Antenna
- 202: Reception section
- 203: Signal separation section
- 204: Demodulation and decoding section

## Claims

1. A user terminal comprising:
a reception section that receives a downlink signal including a downlink control signal and a downlink data signal; and
a demodulation and decoding section that uses the downlink control signal to demodulate and decode the downlink data signal, wherein
the downlink control signal is mapped to a single carrier in units of control channel elements based on a tree-based structure, and
the demodulation and decoding section decodes the downlink control signal in a UE search space in units of control channel elements based on the tree-based structure.

2. The user terminal according to claim 1, wherein
a plurality of signal transmission points of the single carrier for transmitting the downlink control signal constitute a symbol,
the symbol includes a first time region in which the downlink control signal is mapped and a second time region in which the downlink control signal is not mapped, and
the demodulation and decoding section decodes the downlink control signal of the first time region in the UE search space in units of control channel elements.

3. The user terminal according to claim 1 or 2, wherein
the downlink control signal is repeatedly mapped in at least one of the control channel elements or repeatedly mapped between the control channel elements.

4. The user terminal according to any one of claims 1 to 3, wherein
a plurality of signal transmission points of the single carrier for transmitting the downlink control signal constitute a symbol,
a plurality of the symbols constitute a subframe, and
the downlink control signal of the downlink signal for each of a plurality of the subframes is mapped in a specific one or more of the subframes.

5. A user terminal comprising:
a reception section that receives a downlink signal including a downlink control signal and a downlink data signal; and
a demodulation and decoding section that uses the downlink control signal to demodulate and decode the downlink data signal, wherein
the downlink control signal is mapped to contiguous subcarriers in units of control channel elements based on a tree-based structure, and
the demodulation and decoding section decodes the downlink control signal in a UE search space in units of control channel elements based on the tree-based structure.

6. The user terminal according to claim 5, wherein
a radio resource of at least one of the subcarriers includes a first frequency region in which the downlink control signal is mapped and a second frequency region in which the downlink control signal is not mapped, and
the demodulation and decoding section decodes the downlink control signal of the first time region in the UE search space in units of the control channel elements.
